# FASCICULE DE BREVET EUROPEEN

(11) **EP 3 014 027 B1**
(45) Date de publication et mention de la délivrance du brevet: **02.08.2017**
(21) Numéro de dépôt: 14742270.3
(22) Date de dépôt: 24.06.2014
(51) Int. Cl.: E03D 1/32, E03D 1/36

(54) **DISPOSITIF DE COMMANDE DE REMPLISSAGE DE CHASSE D'EAU**
VORRICHTUNG ZUR STEUERUNG DER FÜLLUNG EINES SPÜLKASTENS
DEVICE FOR CONTROLLING THE FILLING OF A CISTERN

(30) Priorité: 27.06.2013 FR 1356196
(43) Date de publication de la demande: 04.05.2016
(73) Titulaire: Etablissements Dubourgel Grange, 38600 Fontaine (FR); Magar, Hubert, 57320 Schwerdorff (FR)
(72) Inventeur: MAGAR, Hubert, 57320 Schwerdorff (FR)
(74) Mandataire: Hugues, Catherine
(86) Numéro de dépôt international: PCT/FR2014/051572
(87) Numéro de publication internationale: WO 2014/207365

(56) Documents cités:
- WO-A1-94/09217
- WO-A1-99/20850
- FR-A1- 2 942 816
- US-A- 5 742 951

## Description

La présente invention concerne un dispositif de commande de remplissage d'une chasse d'eau dans un réservoir principal.

Le déposant a déposé une précédente demande de brevet concernant un robinet actionné par un flotteur dans une boîte à flotteur. L'abaissement du niveau d'eau ainsi que du flotteur ne peut s'obtenir qu'en faisant passer l'eau au dessus de l'une des parois latérale de la boîte à flotteur. En cas de réarmement, l'abaissement ne peut se faire que lors du relâchement du bouton de commande, ce qui confère au dispositif une sécurité positive. Le réarmement se fait à l'aide d'une cloche se trouvant sous le flotteur de manière à ce que lors d'une pression sur un soufflet ou une pompette, un volume d'eau est évacué, et lors du relâchement, le niveau d'eau retombe dans la boîte à flotteur entraînant la descente du flotteur et déclenchant simultanément l'ouverture du robinet flotteur.

Néanmoins ces dispositifs nécessitent des volumes importants pour disposer les différentes pièces assez volumineuses. En effet, il faut prendre en compte les frottements qui auront lieu après vieillissement et suite au dépôt de calcaire à la longue. Il ne faut pas prendre de risque et libérer de préférence la totalité de la masse flotteur lors du réarmement. La taille des organes de commande doit de ce fait être d'autant plus importante. Le demandeur s'est donc orienté vers une solution de réarmement par siphonage qui permet de diminuer nettement les dimensions des dispositifs nécessaires, et par là même l'effort nécessaire lors de la commande. En effet celui-ci s'ajoute à l'effort nécessaire à la commande de la soupape et peut atteindre, voire dépasser, à ce moment-là la limite indiquée par les normes. La solution proposée comporte encore d'autres avantages.

Le document WO 94/09217 concerne un procédé utilisant un siphonage complexe n'apportant pas entière satisfaction.

Le document PCT/GB 98/03094 divulgue un dispositif de siphonage avec un orifice calibré faisant office d'évent, ce dernier se trouvant au fond d'un petit réservoir. Dans le cas d'un fonctionnement sans anomalie, l'évent est toujours noyé dans l'eau permettant ainsi le siphonage et en même temps l'ouverture du robinet flotteur.

Dans le cas d'une petite fuite, le volume d'eau immergeant l'évent a le temps d'être aspiré à travers ce dernier, en conséquence l'évent se trouve finalement à l'atmosphère, et le siphonage ne peut avoir lieu. La boîte à flotteur reste pleine, et donc le robinet flotteur reste fermé et en sécurité.

Concernant le réarmement, ce document propose soit un dispositif de vidange directe se situant à la base de la boîte à flotteur ce qui comporte des risques en cas de fuite, ou alors un mécanisme escamotable qui doit être maintenu en position haute, le temps d'un remplissage du réservoir principal de chasse d'eau jusqu'à la fermeture du robinet flotteur pour l'obtention d'un réarmement.

Le document US5862537 divulgue un dispositif de siphonage par dépression, obtenue lors d'un tirage de chasse d'eau, la chute d'eau spontanée dans le réservoir principal créant une dépression à travers la soupape.

La détection de la petite fuite s'obtient donc du fait que lors d'une baisse lente du niveau d'eau dans le réservoir principal de chasse d'eau il n'y a pas de dépression sur la partie haute du siphon d'où le maintien du niveau d'eau dans la boîte à flotteur et par la même la fermeture du robinet flotteur.

Le réarmement s'obtient grâce à un système annexe à fonctionnement mécanique lequel est actionné à travers un levier de commande de la soupape.

Néanmoins cette solution comporte également des risques. Dans le cas ou le siphon venait à rester en position de siphonage en cas de blocage accidentel du levier de commande, il est impossible de détecter la grande fuite voire la petite fuite.

La présente invention a pour but de pallier au moins en partie à ces inconvénients, et propose une solution permettant d'une seule manoeuvre de réarmer le robinet flotteur tout en garantissant un antisiphonage et donc le maintien en position fermée du robinet flotteur en cas de fuite. La sécurité est parfaitement positive, tout blocage du dispositif se traduisant par le maintien de la fermeture du robinet flotteur.

A cet effet elle propose un dispositif de commande de remplissage d'une chasse d'eau dans un réservoir principal de chasse de toilettes, dans lequel l'arrivée d'eau est contrôlée par un robinet dont la fermeture est commandée par un flotteur mobile depuis une position haute vers une position basse, et inversement, ledit flotteur étant contenu dans une boîte à flotteur et assurant la fermeture dudit robinet en situation de boîte à flotteur pleine en position haute, et son ouverture en situation de boîte à flotteur vide en position basse, ladite boîte à flotteur étant reliée au réservoir principal par au moins un siphon comportant deux tubes, un tube d'aspiration relié à la boîte à flotteur, et un tube de refoulement relié au réservoir principal et débouchant dans un réservoir annexe ouvert sur le volume dudit réservoir principal, les deux tubes étant reliés entre eux au niveau de leur extrémité supérieure par un passage situé au-dessus du niveau de remplissage maximum de ladite boîte à flotteur, ledit dispositif étant caractérisé en ce qu'il comporte un mécanisme de commande muni de moyens d'amorcement dudit siphon prévus mobile depuis une position initiale vers une position actionnée, et inversement, le passage depuis ladite position initiale vers ladite position actionnée induisant une surpression au sein desdits tubes puis dépression, tandis que le passage depuis la position actionnée vers la position initial induit une dépression, de sorte que successivement, ladite surpression et ladite dépression provoque le débordement dudit réservoir annexe, la mise en circulation de l'eau depuis le tube d'aspiration vers le tube de refoulement par siphonage et ainsi une vidange de la boîte à flotteur.

Selon un mode de réalisation préférentiel, ledit tube de refoulement s'étend verticalement et son extrémité inférieure débouche sous le niveau d'eau maximum dudit réservoir annexe.

Avantageusement, lesdits moyens d'amorcement comprennent un moyen de rappel élastique depuis la position actionnée vers la position initiale.

Selon un autre mode de réalisation, ledit passage présente une section calibrée plus petite que les sections de chacune des branches, à savoir les colonnes d'eau ou tubes d'aspiration et de refoulement.

Préférentiellement, ledit moyen de rappel élastique est un soufflet ou un ressort de rappel disposé dans une pompette.

Selon un mode de réalisation particulier, un compartiment est disposé entre ledit siphon et ledit mécanisme de commande, relié par l'intermédiaire d'une liaison, par exemple par un orifice de liaison et que ladite liaison est disposée au niveau dudit passage.

Selon un mode de réalisation avantageux, ladite liaison est disposée au niveau du tube de refoulement et en dessous dudit passage, par exemple par un orifice de liaison décalé, de manière à ménager un volume d'air dans le haut du siphon au-dessus de ladite liaison en situation de réservoir principal plein.

Préférentiellement, le dispositif comporte un siphon secondaire sous forme du moyen d'une cloche s'étendant du haut du compartiment jusqu'en dessous de la liaison entre ledit compartiment et le siphon.

Avantageusement, le dispositif comporte une cloche anti-siphonage agencée pour fournir un volume d'air en cas de petite chasse, et un siphon accessoire agencé pour transférer ce volume d'air vers le tube d'aspiration lors de la remontée de l'eau.

Grâce à ces dispositions le robinet ne peut s'ouvrir que suite à une action volontaire sur le mécanisme de commande qui fait réagir le moyen de rappel élastique. On obtient ainsi une sécurité positive, garantissant la non ouverture du robinet sans action volontaire d'un utilisateur quelle que soit une possible fuite sur un composant quelconque de la chasse d'eau.

Selon d'autres caractéristiques
- ledit passage peut présenter une section calibrée plus petite que les sections de chacune des branches, permettant ainsi un ralentissement du siphonage, et un retardement de l'ouverture du robinet,
- ledit moyen de rappel élastique peut être un soufflet, ou un ressort disposé dans une pompette, constituant deux solutions simples et robustes pour la mise en oeuvre de l'invention,
- un compartiment peut être disposé entre ledit siphon, par une liaison, par exemple par un orifice de liaison, et ledit mécanisme de commande, par exemple par un tuyau,
- ladite liaison peut être disposée au niveau dudit passage, donnant ainsi la meilleure fiabilité du fait de son action au point le plus haut du siphon,
- ladite liaison peut être disposée au niveau du tube de refoulement, et en dessous dudit passage, par exemple par un orifice de liaison décalé, de manière à ménager un volume d'air dans le haut du siphon au-dessus de ladite liaison en situation de réservoir principal plein ; une telle disposition permet une implantation plus compacte,
- ledit dispositif peut comporter en outre un siphon secondaire, par exemple par le moyen d'une cloche s'étendant du haut du compartiment jusqu'en dessous de la liaison entre ledit compartiment et le siphon, l'ajout de la cloche permettant d'améliorer la fiabilité en regard de la petite fuite,
- le mécanisme de commande peut également être monté directement sur la tige de commande de la soupape, ou alors le mécanisme de commande de la soupape peut être réalisé de manière à ce que le bouton de commande reste maintenu enfoncé lorsque la soupape est en position d'ouverture, ce qui maintient également fermé le robinet, et permet une détection de grande fuite.

L'avantage apporté par la présente invention réside principalement en ce qu'elle propose un procédé et un dispositif de chasse d'eau à sécurité accrue par rapport aux fuites, avec une garantie améliorée de ne pas ouvrir l'arrivée d'eau en cas de fuite.

Le flotteur est seulement libéré lors du relâchement du bouton de commande. Ainsi, lors d'un blocage accidentel du bouton de commande, le robinet est maintenu fermé. Cela permet d'éviter ainsi un grand gaspillage d'eau du fait que la soupape reste maintenue en position d'ouverture.

La présente invention sera mieux comprise à la lecture de la description détaillée qui suit faite en référence aux figures annexées dans lesquelles :
- la figure 1 est une vue schématique d'un premier mode de réalisation du dispositif de commande de remplissage contenu dans un réservoir principal de chasse d'eau selon l'invention ; et
- la figure 2 est une vue schématique d'un deuxième mode de réalisation de ce même dispositif selon l'invention.

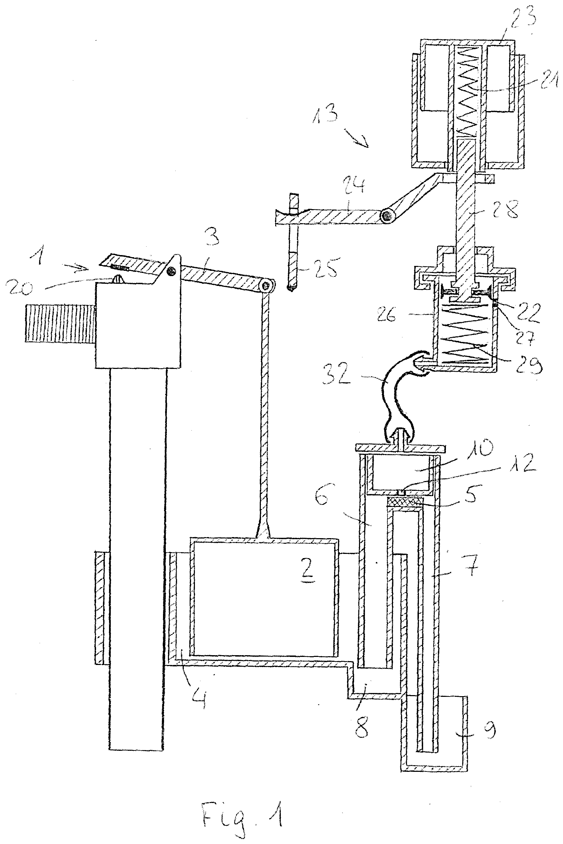

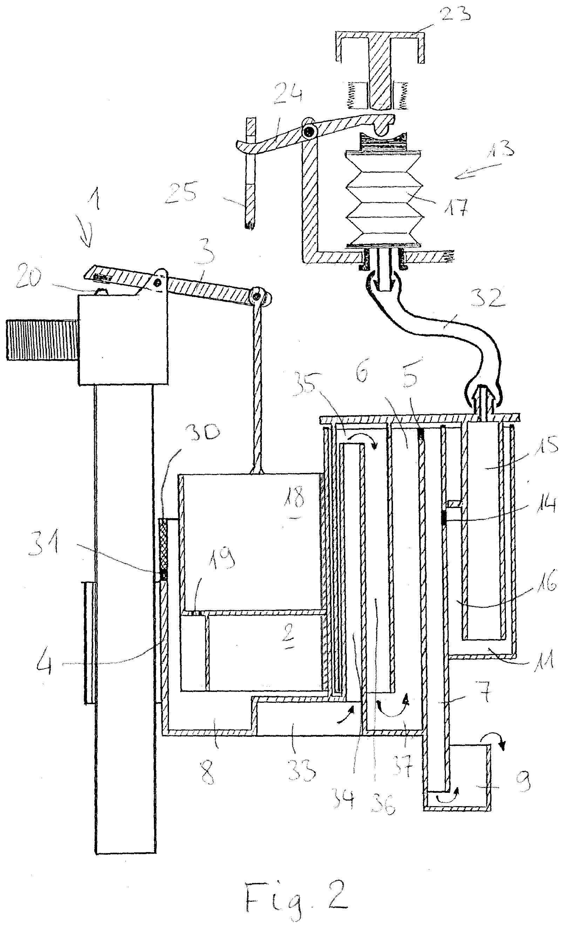

Comme illustré sur les figures 1 et 2, la « chasse d'eau » comprend un réservoir principal et comporte un robinet 1 d'arrivée d'eau dudit réservoir principal actionné par un flotteur 2 mobile depuis une position haute vers une position basse, et inversement, par l'intermédiaire d'un levier 3. Le flotteur 2 est disposé au sein du dispositif de commande selon l'invention, dans une boîte à flotteur 4 dont il est pourvu. Lorsque la boîte à flotteur 4 se vide, le flotteur 2 descend dans la boîte à flotteur 4, ce qui ouvre le robinet 1. Pour obtenir la vidange de la boîte à flotteur 4, le dispositif de commande comporte un siphon composé d'un passage 5 entre les extrémités hautes d'un tube d'aspiration 6 et d'un tube de refoulement 7. La colonne interne formée par le tube d'aspiration 6 débouche en son extrémité basse dans la boîte à flotteur 4. Selon un mode préféré de réalisation permettant une vidange la plus complète possible de la boîte à flotteur 4, un soubassement 8 est pratiqué dans le fond de ladite boîte à flotteur 4, dans lequel l'extrémité basse du tube d'aspiration 6 débouche. Ledit soubassement 8 constitue un décroché inférieur, s'étendant sous le fond de ladite boîte à flotteur 4. Le tube de refoulement 7 débouche par son extrémité inférieure dans un réservoir annexe 9, situé à l'extérieur de ladite boîte à flotteur 4 et à un niveau plus bas que l'extrémité inférieure du tube d'aspiration 6, de sorte qu'en cas d'amorcement du siphon, l'eau s'écoule du tube d'aspiration 6 vers le tube de refoulement 7, vidant ainsi la boîte à flotteur 4.

En cas d'actionnement de la chasse d'eau, le niveau de l'eau du réservoir principal baisse rapidement, et le tube de refoulement 7 se trouve juste noyé à sa base dans le réservoir annexe 9. Puis, lors du relâchement du bouton de commande, les deux colonnes d'eau dans les tubes d'aspiration 6 et de refoulement 7 se rejoignent au niveau du passage 5, ce qui déclenche le siphonage de la boîte à flotteur 4. Suite à la descente dudit flotteur 2, ceci produit l'ouverture du robinet 1, et donc le remplissage du réservoir principal de la chasse d'eau, jusqu'à remplir à nouveau la boîte à flotteur 4, lorsque celle-ci se trouve totalement ou au moins en partie immergée, et ainsi faire remonter le flotteur 2 et fermer le robinet 1.

Néanmoins, en cas de petite fuite, l'eau peut s'écouler du réservoir principal, et le niveau d'eau dudit réservoir arrive lentement vers le bas du tube de refoulement 7 et le bac annexe 9. Pour éviter dans un tel cas d'ouvrir le robinet 1, il faut éviter que le siphon s'amorce et se mette en action. Pour cela, selon l'invention, un compartiment 10, par exemple qui se trouve à l'atmosphère à travers un orifice de mise à l'atmosphère 27, est disposé, en liaison avec la partie haute du siphon, de manière à empêcher le siphon de s'amorcer et de se mettre en action. La baisse du niveau d'eau dans le réservoir principal, et par là même dans le tube de refoulement 7 n'a alors pas d'effet sur le tube d'aspiration 6, le niveau d'eau dans ce dernier reste donc inchangé et le siphon ne s'enclenche pas.

Selon un autre mode de réalisation, un compartiment 11 est disposé, en liaison avec la partie haute du siphon à travers un orifice de liaison décalé 14 de sorte que la partie haute des deux tubes d'aspiration 6 et de refoulement 7, se situant au-dessus du niveau de l'orifice de liaison décalé 14, reste pleine d'air, et cela même en cas de fuite sur le dispositif de commande. La baisse du niveau d'eau dans le réservoir principal et par là même dans le tube de refoulement 7 ne suffit alors pas pour faire monter le niveau d'eau dans le tube d'aspiration 6 jusqu'au passage 5, et le siphon ne s'enclenche pas.

Deux exemples de réalisation d'un tel compartiment 10, 11 sont décrits ci-après.

Dans le premier exemple de réalisation, représenté sur la figure 1, le dispositif comporte un compartiment 10 disposé au-dessus du passage 5, avec un orifice de liaison 12. Le compartiment 10, en liaison avec l'orifice de mise à l'atmosphère 27 permet d'éviter le siphonage. Le compartiment 10 est dimensionné pour permettre d'y loger lors de l'aspiration une quantité d'eau suffisante pour permettre au siphon une fois enclenché de vider complètement la boîte à flotteur 4.

L'intérieur dudit compartiment 10 peut être soumis à une dépression.

Pour obtenir le siphonage, et donc l'ouverture du robinet 1 pour le remplissage du réservoir principal, un mécanisme de commande 13 permet dans un premier temps par une poussée d'injecter de l'air à travers le compartiment 10 et de chasser l'eau contenue dans le tube de refoulement 7, puis par un mouvement inverse, d'aspirer l'eau du réservoir annexe 9 dans et le long du tube de refoulement 7 et l'eau de la boîte à flotteur 4 dans et le long du tube d'aspiration 6, jusqu'à ce qu'au moins une des deux colonnes atteignent le passage 5, voire que les deux colonnes soient entièrement remplies d'eau, ainsi que le passage 5, et donc se rejoignent, ce qui amorce le siphon, et vide alors la boîte à flotteur 4. Le mécanisme de commande 13 sera décrit un peu plus loin.

La disposition du compartiment 10 ne permet pas une immersion totale, et le fait que le dispositif est à chaque manoeuvre à l'atmosphère évite un siphonage intempestif dans le cas d'une petite fuite sur la soupape ou la bonde du réservoir principal de la chasse d'eau.

Selon un deuxième exemple de réalisation du compartiment, représenté sur la figure 2, fonctionnant toujours en toute sécurité même dans le cas d'une fuite sur le mécanisme de commande 13, le compartiment 11 est disposé sur le côté du passage 5 et de la partie haute du tube de refoulement 7. L'aspiration générée au sein des deux tubes d'aspiration 6 et de refoulement 7 est alors décalée comme on peut le voir sur la figure 2. Un orifice de liaison décalé 14 établit la liaison entre la partie haute du tube de refoulement 7 et le compartiment 11. Le compartiment 11 permet de loger au moins une partie de l'eau aspirée lors de l'aspiration, et d'éviter que l'eau ne remonte dans un tuyau 32.

On notera que ce tuyau 32 sert de canal de circulation lors des opérations d'aspiration et de refoulement d'air et/ou d'eau au sein du dispositif selon l'invention. Ledit tuyau 32 est relié à son extrémité supérieure au mécanisme de déclenchement, à savoir les moyens de commande.

Le tuyau 32 peut disposer d'un diamètre plus conséquent, apte à contenir la quantité d'eau aspirée lors de l'aspiration, une partie d'un tel tube constituant alors le compartiment 10, 11. Une telle solution présente néanmoins l'inconvénient que de tels tubes plus gros sont plus difficiles à implanter dans une chasse d'eau qui doit rester le moins volumineuse possible.

Un tel décalage de l'aspiration associée au compartiment 11 permet de maintenir un volume d'air suffisant, tel une poche d'air, pour éviter le siphonage dans le cas d'une petite fuite d'air sur le dispositif de commande 13 et d'une baisse lente du niveau d'eau dans le réservoir principal de chasse d'eau, ce qui permet en même temps d'immerger le siphon dans son intégralité.

On obtient ainsi un effet similaire à celui obtenu par une prolongation des deux tubes d'aspiration 6 et de refoulement 7, de sorte que le sommet du siphon, là où les deux colonnes se rejoignent, se trouve suffisamment haut et hors eau par rapport au niveau d'eau du réservoir principal, lors de la fermeture du robinet 1, laissant ainsi un volume d'air suffisant de manière à ne pas amorcer un siphonage dans le cas de petite fuite, et donc d'une baisse lente du niveau d'eau dans le réservoir principal.

Selon un mode préféré de réalisation, les moyens de commande peuvent se présenter sous la forme d'un soufflet 17.

Ledit soufflet 17 peut être remplacé par une pompette 26 avec ou sans orifice de mise à l'atmosphère 27.

Quel que soit le mode de réalisation, la section du tube d'aspiration 6 peut, de préférence, être supérieure à celle du tube de refoulement 7 permettant ainsi de diminuer l'encombrement de l'ensemble du dispositif.

Pour améliorer encore la fiabilité du dispositif, notamment en cas de fuite sur le mécanisme de commande 13, une cloche 15 est disposée dans le compartiment 11. Suite à une fuite sur le mécanisme de commande 13 ayant partiellement rempli le compartiment 11, le niveau d'eau dans ce dernier se trouvant alors au dessus de l'orifice de liaison décalé 14, lors d'une fuite d'eau au niveau de la soupape dans le fond du réservoir principal, le niveau dans ledit réservoir principal descend lentement libérant progressivement le tube de refoulement 7, ce qui provoque la descente de l'air dans ce même tube et la remontée de l'eau et de l'air dans le tube d'aspiration 6, étant donné que le niveau d'eau dans la boîte à flotteur 4 reste inchangé. Lorsque l'air dans le tube de refoulement 7 arrive au niveau de l'orifice de liaison décalé 14, alors l'air passe à travers cet orifice de liaison décalé 14 et remonte dans le compartiment 11 et l'air est ainsi remplacé par l'eau qui permet au tube de refoulement 7, comme s'il n'y avait pas eu d'air, de faire remonter l'eau le long et dans le tube d'aspiration 6, donnant finalement lieu à un siphonage. La cloche 15 permet ainsi d'obtenir un siphon secondaire 16 empêchant l'air de remonter dans le compartiment 11 et d'être remplacé par de l'eau lors de la descente du niveau de la colonne d'eau dans le tube de refoulement 7. Le siphon secondaire 16 a ainsi une fonction de verrouillage. La cloche 15 permet de récupérer le mélange air-eau lors du relâchement des moyens de commande, à savoir du soufflet 17, la cloche 15 étant dimensionnée de sorte que l'eau ne remonte pas au sommet et ne puisse pas pénétrer dans le tuyau 32 reliant la cloche 15 au soufflet 17 ou à la pompette 26.

Selon un autre mode de réalisation représenté à la figure 2, le flotteur 2 est surmonté d'un réservoir de lest 18. Les niveaux d'eau dans le réservoir principal ainsi que celui du réservoir de lest 18 descendant simultanément, la vidange du réservoir de lest 18 se fait à travers un orifice calibré 19, ce qui permet de maintenir le flotteur 2 en position haute, et par là même, le robinet 1 en position fermée, le levier 3 venant appuyer sur l'orifice d'échappement 20 d'une valve hydraulique.

On décrit ci-après deux exemples de dispositifs de commande 13 convenant pour la présente invention, chacun des dispositifs de commande pouvant être employé pour l'une quelconque des solutions de compartiment 10 au-dessus du passage 5 ou de compartiment 11 à côté du haut du tube de refoulement 7, avec ou sans cloche 15.

Selon un premier exemple de réalisation, représenté à la figure 2, pour tirer la chasse d'eau, on appuie sur un bouton de commande 23. Un levier de commande 24 fait remonter la soupape au fond du réservoir principal à travers une tige de commande 25, et permet donc à l'eau du réservoir principal de s'écouler. En même temps, le soufflet 17 des moyens de commande se comprime, passant d'une position initiale vers une position actionnée. Le volume d'air du soufflet 17 est suffisamment important pour éjecter une quantité d'air à une pression suffisante pour chasser une partie de l'eau à la base du tube de refoulement 7, étant donné que la base du tube de refoulement 7 se trouve plus bas. Lors du relâchement du bouton de commande 23, relâchant en même temps le soufflet 17, celui-ci en se détendant, revenant vers la position initiale, aspire l'eau à travers les tubes d'aspiration 6 et de refoulement 7. Ceci fait remonter le niveau d'eau jusqu'au passage 5, de manière à siphonner et vidanger la boîte à flotteur 4.

Après chaque tirage de chasse d'eau, et vidange de la boite à flotteur après siphonage, les deux colonnes d'eau dans les tubes d'aspiration 6 et de refoulement 7 retombent après avoir aspiré de l'air par le tube d'aspiration 6 (remise à zéro ou « RAZ »).

La RAZ s'obtient généralement pour des grandes chasses d'eau utilisant un volume d'eau plus important et qui permet une RAZ ce qui pourrait donc satisfaire pour la détection de fuites.

La RAZ est cependant nécessaire pour de petites chasses, car sans RAZ, le siphon continue à siphonner et siphonne vers la boîte à flotteur 4 lors d'un remplissage du réservoir principal et le flotteur 2 remonte donc avec le niveau d'eau dans le réservoir principal et le robinet flotteur 1 coupe ainsi l'arrivée d'eau avant d'avoir atteint le bon niveau de réglage, c'est-à-dire le niveau et la fermeture du robinet atteint par la surverse de l'eau du réservoir dans la boîte à flotteur 4.

La cloche anti-siphonage 33 se trouve juste hors eau lors du tirage de la petite chasse, l'air venant ainsi remplacer l'eau qui s'y trouvait. En même temps le niveau d'eau dans la boîte à flotteur 4 descend, le passage 5 freinant la descente du niveau d'eau dans la boîte à flotteur 4, temporisant ainsi l'ouverture du robinet flotteur 1. Lors de l'ouverture du robinet flotteur 1, le niveau d'eau dans le réservoir de chasse remonte et l'eau pénètre dans la cloche anti-siphonage 33, refoulant l'air à travers la cheminée 34 vers la cloche de renvoi 35. La pression étant croissante dans la cloche anti-siphonage 33, du fait de la remontée du niveau dans le réservoir principal et décroissante du côté de la boîte à flotteur 4 où le niveau d'eau continue à descendre, et de ce fait, la pression est suffisante pour permettre à l'air de descendre dans la colonne 36 jusqu'à une liaison anti-siphonage 37 et de remonter dans le tube d'aspiration 6, créant ainsi une poche d'air comme pour une RAZ. Il est à noter que cette liaison 37 débouche sur la boite à flotteur 4.

Cette poche d'air est suffisante pour garantir l'anti-siphonage vers la boîte à flotteur 4 permettant ainsi d'obtenir après chaque tirage de petite chasse, le bon niveau de remplissage du réservoir principal. Le niveau d'eau dans le réservoir principal de chasse monte et vient remplir la boîte à flotteur 4 par surverse.

En même temps, l'anti-siphonage est garanti grâce à la poche d'air dans le cas d'une petite fuite et d'une descente lente du niveau d'eau dans le réservoir fournissant en plus un complément d'air après une RAZ.

Selon un deuxième exemple de réalisation, représenté à la figure 1, lors d'un tirage de chasse d'eau, en appuyant sur le bouton de commande 23, le levier de commande 24 fait remonter la soupape au fond du réservoir principal à travers sa tige de commande 25, et permet donc à l'eau du réservoir principal de s'écouler hors dudit réservoir principal. En même temps le ressort 21, en se comprimant, fait descendre l'axe 28 de la pompette 26 des moyens de commande, entrainant la descente du joint en caoutchouc 22 tout en comprimant un ressort de rappel 29. Le volume d'air de la pompette est suffisant pour injecter une quantité d'air suffisante pour chasser une partie de l'eau à la base du tube de refoulement 7 étant donné que la base du tube de refoulement 7 se trouve plus bas. Lors du relâchement du bouton de commande 23 relâchant en même temps le ressort 21, le ressort de rappel 29 fait remonter l'axe de la pompette 26 et par là même, le joint 22 solidaire de ce dernier, aspirant de ce fait l'eau à travers les tubes d'aspiration 6 et de refoulement 7. Ceci fait remonter le niveau d'eau jusqu'au passage 5, de manière à siphonner et vidanger la boîte à flotteur 4.

Tout en siphonnant, l'eau vient ensuite remplir partiellement le compartiment 10, 11 jusqu'à ce que le joint 22 vienne libérer l'orifice de mise à l'atmosphère 27 mettant à ce moment-là l'ensemble du dispositif de siphonage à l'atmosphère.

L'orifice de liaison 12 est calibré de manière à ce que le siphonage de la boîte à flotteur 4 permette de libérer sur toute sa hauteur le flotteur 2, les deux colonnes d'aspiration et de refoulement étant à ce moment-là en mesure de retomber après avoir aspiré de l'air.

Après la mise à l'atmosphère du dispositif de siphonage, l'air pouvant pénétrer par l'orifice de mise à l'atmosphère 27, le compartiment 10 se vidange après le temps nécessaire permettant le siphonage de la boîte à flotteur 4. Le dispositif est ainsi en mesure de détecter la petite fuite, le siphonage ne pouvant pas avoir lieu sans actionnement du mécanisme de commande 13, le siphon 5, 6, 7 étant à l'atmosphère à travers l'orifice de mise à l'atmosphère 27 et l'orifice de liaison 12.

Lors d'un réarmement après une fuite, le réservoir annexe 9 permet le siphonage et au lieu que les bulles d'air s'échappent à la base du tube d'aspiration 6, elles s'échappent à la base du tube de refoulement 7, étant donné que l'immersion de ce dernier est plus faible que pour le tube d'aspiration 6 dans la boîte à flotteur 4, le réservoir principal de chasse étant vide suite à ladite fuite.

La boîte à flotteur 4 est alors pleine à ras bord, ainsi que le réservoir annexe 9. Pour réarmer ce robinet 1, il suffit d'actionner le soufflet 17 ou la pompette 26 en appuyant sur le bouton de commande 23, ce qui permet de chasser l'air à travers le tube de refoulement 7, étant donné que le réservoir principal de chasse d'eau est vide. Puis, en relâchant le bouton de commande 23, l'eau dans les tubes d'aspiration 6 et de refoulement 7 remonte et le fait que le tube de refoulement 7 est plus long (hors eau), la colonne d'eau contenue dans ce dernier suffira en remontant pour amorcer le siphonage. Celui-ci permet alors de vidanger la boîte à flotteur 4 et par là même de provoquer l'ouverture du robinet 1.

Le robinet 1 se trouve après chaque remplissage du réservoir principal en position de fermeture, en sécurité, et seule une manoeuvre du mécanisme de commande 13 peut en permettre l'ouverture. On réarme le robinet 1 à chaque manoeuvre, l'ouverture du robinet 1 ne se faisant que lors du relâchement du bouton. On obtient là encore une sécurité positive, selon laquelle le robinet 1 est maintenu en position de fermeture dans le cas d'un blocage accidentel du bouton de commande.

Ce dispositif de réarmement et de relance du robinet 1 permet en quelque sorte une remise à zéro à chaque manoeuvre, mettant à chaque fois le dispositif à l'atmosphère.

Selon un mode préféré de réalisation de l'invention, le passage 5 est calibré de manière à obtenir un écoulement ralenti par les tubes d'aspiration 6 et de refoulement 7, et donc une ouverture différée du robinet 1. Ceci permet d'éviter de remplir le réservoir principal, tant que celui-ci n'est pas refermé, et donc de bien contrôler la quantité d'eau à utiliser à chaque chasse.

C'est le passage calibré 5 qui détermine la temporisation à l'ouverture, le robinet 1 s'ouvrant normalement juste après la fermeture de la soupape du fond du réservoir principal.

Les deux modes de réalisation du dispositif de réarmement peuvent être utilisés indépendamment de la commande de soupape, pour le cas d'un robinet flotteur autonome utilisant le réservoir de lest. Le dispositif de réarmement utilisant les moyens de commande sous forme de soufflet ou de pompette, est à ce moment-là monté sur l'orifice du réservoir principal de chasse restant libre, le dispositif servant juste comme réarmement en cas de mise en sécurité du robinet flotteur suite à une détection de fuite.

Un autre exemple de réalisation consiste à utiliser des moyens de commande sous forme d'une pompette pourvue de valves anti-retour, fonctionnant telle une pompe d'amorçage et qui permet alors d'aspirer et de vidanger en partie la boite à flotteur, faisant ainsi descendre son niveau d'eau, et par là même le flotteur dans cette dernière, déclenchant alors l'ouverture du robinet flotteur.

On peut aussi obtenir une ouverture à retardement du robinet 1 en disposant des rehausses 30 au-dessus des parois latérales de la boîte à flotteur 4 et un orifice calibré 31 au niveau de la hauteur initiale de la boîte à flotteur 4. On diffère ainsi la vidange de la boîte à flotteur 4 et on obtient ainsi l'ouverture à retardement du robinet 1.

Selon les divers modes de réalisation de l'invention, on obtient les avantages suivants :
- l'ouverture du robinet flotteur 1 par siphonage de la boîte à flotteur 4 lors du tirage de la chasse d'eau,
- le retardement à l'ouverture du robinet flotteur 1 grâce au passage 5 calibré entre les tubes d'aspiration 6 et de refoulement 7,
- la fermeture et la mise en sécurité du robinet flotteur 1 après chaque tirage de chasse d'eau et de remplissage du réservoir principal,
- l'anti-siphonage dans le cas d'une petite fuite sur la soupape, de manière à détecter la fuite,
- la détection de la petite fuite dans le cas d'une petite fuite sur la soupape,
- le maintien de la fermeture du robinet flotteur 1 dans le cas d'un blocage accidentel du bouton de commande 23 (correspondant à une grande fuite)
- la fermeture du robinet 1 dans le cas d'un blocage accidentel de la soupape en position haute ou ouverture (correspondant à une grande fuite),
- la détection de la grande fuite quelle que soit la hauteur de blocage de la soupape,
- le réarmement du robinet flotteur 1 suite à une détection de fuite, et sa mise en sécurité.

### Nomenclature

1. robinet
2. flotteur
3. levier
4. boîte à flotteur
5. passage
6. tube d'aspiration
7. tube de refoulement
8. soubassement
9. réservoir annexe
10. compartiment
11. compartiment
12. orifice de liaison
13. mécanisme de commande
14. orifice de liaison décalé
15. cloche
16. siphon secondaire
17. soufflet
18. réservoir de lest
19. orifice calibré
20. orifice d'échappement
21. ressort
22. joint
23. bouton poussoir
24. levier de commande
25. tige de commande
26. pompette
27. orifice de mise à l'atmosphère
28.axe
29. ressort de rappel
30. rehausse
31. orifice calibré
32. tuyau
33. cloche anti-siphonage
34. cheminée
35. cloche de renvoi
36. colonne
37. liaison anti-siphonage

## Revendications

1. Dispositif de commande de remplissage d'une chasse d'eau conçu apte à être installé dans un réservoir principal de chasse d'eau de toilettes, ledit dispositif comportant un robinet (1) qui contrôle l'arrivée d'eau et un flotteur (2) qui contrôle la fermeture du robinet (1), ledit flotteur (2) étant mobile depuis une position haute vers une position basse, et inversement, ledit flotteur étant contenu dans une boîte à flotteur (4) et assurant la fermeture dudit robinet (1) en situation de boîte à flotteur (4) pleine en position haute, et son ouverture en situation de boîte à flotteur (4) vide en position basse, ladite boîte à flotteur (4) étant reliée au réservoir principal par au moins un siphon comportant deux tubes, un tube d'aspiration (6) relié à la boîte à flotteur (4), et un tube de refoulement (7) relié au réservoir principal et débouchant dans celui-ci les deux tubes (6, 7) étant reliés entre eux au niveau de leur extrémité supérieure par un passage (5) situé au-dessus du niveau de remplissage maximum de ladite boîte à flotteur (4), ledit dispositif de commande comportant en outre un mécanisme de commande (13) muni de moyens d'amorcement dudit siphon prévus mobile depuis une position initiale vers une position actionnée, et inversement, le passage depuis ladite position initiale vers ladite position actionnée induisant une dépression au sein desdits tubes (6, 7), **caractérisé en ce que** ledit tube de refoulement (7) débouche dans un réservoir annexe (9) ouvert sur le volume dudit réservoir principal (1), tandis que le passage du mécanisme de commande (13) depuis la position initiale vers la position actionnée induit une surpression au sein desdits tubes (6, 7) et que le passage depuis la position actionnée vers la position initiale induit une dépression, de sorte que successivement, ladite surpression et ladite dépression provoquent le débordement dudit réservoir annexe, la mise en circulation de l'eau depuis le tube d'aspiration (6) vers le tube de refoulement (7) par siphonage et ainsi une vidange de la boîte à flotteur (4).

2. Dispositif selon la revendication précédente, **caractérisé par le fait que** ledit tube de refoulement s'étend verticalement et son extrémité inférieure débouche sous le niveau d'eau maximum dudit réservoir annexe (9).

3. Dispositif selon la revendication précédente, **caractérisé par le fait que** lesdits moyens d'amorcement comprennent un moyen de rappel élastique (17, 29) depuis la position actionnée vers la position initiale.

4. Dispositif selon la revendication 3, **caractérisé par le fait que** ledit moyen de rappel élastique est un soufflet (17) ou un ressort de rappel (29) disposé dans une pompette.

5. Dispositif selon l'une des revendications 3 à 4, **caractérisé par le fait qu'**un compartiment (10, 11) est disposé entre ledit siphon (5, 6, 7) et ledit mécanisme de commande, relié par l'intermédiaire d'une liaison (12, 14), par exemple par un orifice de liaison (12, 14), (13) et que ladite liaison (12) est disposée au niveau dudit passage (5).

6. Dispositif selon la revendication 5, **caractérisé par le fait que** ladite liaison (14) est disposée au niveau du tube de refoulement (7) et en dessous dudit passage (5), par exemple par un orifice de liaison décalé (14), de manière à ménager un volume d'air dans le haut du siphon (5, 6, 7) au-dessus de ladite liaison en situation de réservoir principal plein.

7. Dispositif selon la revendication précédente, **caractérisé par le fait qu'**il comporte un siphon secondaire (16) sous forme du moyen d'une cloche (15) s'étendant du haut du compartiment (11) jusqu'en dessous de la liaison (14) entre ledit compartiment (11) et le siphon (5, 6, 7).

8. Dispositif selon l'une des revendications 3 à 9, **caractérisé par le fait qu'**il comporte une cloche anti-siphonage (33) agencée pour fournir un volume d'air en cas de petite chasse, et un siphon accessoire (34, 35, 36, 37) agencé pour transférer ce volume d'air vers le tube d'aspiration (6) lors de la remontée de l'eau.

## Patentansprüche

1. Vorrichtung zur Steuerung der Füllung eines Spülkastens, die ausgebildet ist, um imstande zu sein, in einem WC-Spülkasten-Hauptreservoir installiert zu sein, wobei die Vorrichtung einen Hahn (1) aufweist, welcher die Ankunft des Wassers steuert und einen Schwimmer (2), der das Schließen des Hahns (1) steuert, wobei der Schwimmer (2) von einer hohen Position in eine niedrige Position und umgekehrt bewegbar ist, wobei der Schwimmer in einem Schwimmerkasten (4) enthalten ist und das Schließen des Hahns (1) in Situation Schwimmerkasten (4) voll in hoher Position und sein Öffnen in Situation Schwimmerkasten (4) leer in niedriger Position sichert, wobei der Schwimmerkasten (4) mit dem Hauptreservoir mittels mindestens eines Siphons verbunden ist, welcher zwei Rohre, ein mit dem Schwimmerkasten (4) verbundenes Ansaugrohr (6) und ein mit dem Hauptreservoir verbundenes in dieses ausmündende Druckrohr (7), aufweist, wobei die zwei Rohre (6, 7) untereinander im Bereich ihres oberen Endes mittels eines Übergangs (5) verbunden sind, der sich über dem maximalen Füllstand des Schwimmerkastens (4) befindet, wobei die Steuervorrichtung ferner einen Steuermechanismus (13) aufweist, der mit Startmitteln des Siphons ausgestattet sind, die von einer Ausgangsposition in eine betätigte Position und umgekehrt bewegbar vorgesehen sind, wobei der Übergang von der Ausgangsposition in die betätigte Position einen Unterdruck in den Rohren (6, 7) bewirkt, **dadurch gekennzeichnet, dass** das Druckrohr (7) in ein Nebenreservoir (9) ausmündet, das auf dem Volumen des Hauptreservoirs (1) geöffnet ist, wogegen der Übergang des Steuermechanismus (13) von der Ausgangsposition in die betätigte Position einen Überdruck innerhalb der Rohre (6, 7) bewirkt und dass der Übergang von der betätigten Position in die Ausgangsposition einen Unterdruck bewirkt, so dass nacheinander der Überdruck und der Unterdruck das Überlaufen des Nebenreservoirs, das Inzirkulationversetzen des Wassers vom Ansaugrohr (6) zum Druckrohr (7) durch Siphonieren und damit eine Entleerung des Schwimmerkastens (4) bewirken.

2. Vorrichtung nach vorangehendem Anspruch, **dadurch gekennzeichnet, dass** sich das Druckrohr vertikal erstreckt und sein unteres Ende unter dem maximalen Wasserstand des Nebenreservoirs (9) ausmündet.

3. Vorrichtung nach vorangehendem Anspruch, **dadurch gekennzeichnet, dass** die Startmittel ein elastisches Rückstellmittel (17, 29) aus der betätigten Position in die Ausgangsposition umfassen.

4. Vorrichtung nach Anspruch 3, **dadurch gekennzeichnet, dass** das elastische Rückstellmittel ein in einer Pumpe angeordneter Balg (17) oder eine Rückstellfeder (29) ist.

5. Vorrichtung nach einem der Ansprüche 3 bis 4, **dadurch gekennzeichnet, dass** ein Fach (10, 11) zwischen dem Siphon (5, 6, 7) und dem Steuermechanismus angeordnet ist, das mit Hilfe einer Verbindung (12, 14), beispielsweise mittels einer Verbindungsöffnung (12, 14), verbunden ist, (13) und dass die Verbindung (12) im Bereich des Übergangs (5) angeordnet ist.

6. Vorrichtung nach Anspruch 5, **dadurch gekennzeichnet, dass** die Verbindung (14) im Bereich des Druckrohrs (7) und unter dem Übergang (5), beispielsweise mittels einer versetzten Öffnung (14), angeordnet ist, so dass ein Luftvolumen oben im Siphon (5, 6, 7) über der Verbindung in Situation Hauptreservoir voll ausgebildet wird.

7. Vorrichtung nach vorangehendem Anspruch, **dadurch gekennzeichnet, dass** sie einen sekundären Siphon (16) in Form des Mittels einer Glocke (15) aufweist, die sich von über dem Fach (11) bis unter die Verbindung (14) zwischen dem Fach (11) und dem Siphon (5, 6, 7) erstreckt.

8. Vorrichtung nach einem der Ansprüche 3 bis 9, **dadurch gekennzeichnet, dass** sie eine Anti-Siphonierungs-Glocke (33) aufweist, die ausgebildet ist, um ein Luftvolumen bei kleiner Spülung bereitzustellen, und einen Nebensiphon (34, 35, 36, 37), der ausgebildet ist, um dieses Luftvolumen in das Ansaugrohr (6) beim Steigen des Wassers zu transferieren.

## Claims

1. A device for controlling the filling of a cistern designed to be able to be installed in a main reservoir of a toilet flushing system, said device including a valve (1) that controls the water intake and a float (2) that controls the closing of the valve (1), said float (2) being movable from a high position to a low position, and inversely, said float being contained in a float housing (4) and closing said valve (1) when the float housing (4) is full in the high position, and opening it when the float housing (4) is empty in the low position, said float housing (4) being connected to the main reservoir by at least one siphon comprising two tubes, namely a suction tube (6) connected to the float housing (4) and a discharge tube (7) connected to the main reservoir and emerging therein, the two tubes (6, 7) being connected to one another at their upper end by a passage (5) situated above the maximum filling level of said float housing (4), said control device further including a control mechanism (13) provided with means for priming said siphon provided to be movable from an initial position toward an actuated position, and inversely, the passage from said initial position toward said actuated position causing an underpressure within said tubes (6, 7), **characterized in that** said discharge tube (7) emerges in an auxiliary reservoir (9) open on the volume of said main reservoir (1), while the passage of the control mechanism (13) from the initial position toward the actuated position causes an overpressure within said tubes (6, 7) and the passage from the actuated position toward the initial position causes an underpressure, such that successively, said overpressure and said underpressure result in an overflowing of said auxiliary reservoir, the circulation of the water from the suction tube (6) toward the discharge tube (7) by siphoning, and thus the emptying of the float housing (4).

2. The device according to the preceding claim, **characterized in that** said discharge tube extends vertically, and its lower end emerges below the maximum water level of said auxiliary reservoir (9).

3. The device according to the preceding claim, **characterized in that** said priming means comprise an elastic return means (17, 29) from the actuated position toward the initial position.

4. The device according to claim 3, **characterized in that** said elastic return means is a bellows (17) or a return spring (29) positioned in a small pump.

5. The device according to one of claims 3 to 4, **characterized in** the compartment (10, 11) is positioned between said siphon (5, 6, 7) and said control mechanism, connected via a link (12, 14), for example via a link orifice (12, 14), (13) and said link (12) is positioned at said passage (5).

6. The device according to claim 5, **characterized in that** said link (14) is positioned at the discharge tube (7) below said passage (5), for example via an offset link orifice (14), so as to arrange a volume of air in the top of the siphon (5, 6, 7) above said link in the full main reservoir situation.

7. The device according to the preceding claim, **characterized in that** it includes a secondary siphon (16) in the form of a bell (15) extending from the top of the compartment (11) to below the link (14) between said compartment (11) and the siphon (5, 6, 7).

8. The device according to one of claims 3 to 9, **characterized in that** it includes an anti-siphoning bell (33) arranged to provide a volume of air in case of small cistern, and an auxiliary siphon (34, 35, 36, 37) arranged to transfer this volume of air toward the suction tube (6) when the water rises.
